(19) **Europäisches Patentamt / European Patent Office / Office européen des brevets**

(11) **EP 1 707 569 B1**

(12) # EUROPÄISCHE PATENTSCHRIFT

(45) Veröffentlichungstag und Bekanntmachung des Hinweises auf die Patenterteilung:
**02.03.2011 Patentblatt 2011/09**

(51) Int Cl.:
***C07F 7/16*** *(2006.01)*

(21) Anmeldenummer: **06001114.5**

(22) Anmeldetag: **19.01.2006**

(54) **Verfahren zur Herstellung von Methylchlorsilanen**

Process for the preparation of methylchlorosilanes

Procédé de préparation de méthylchlorosilanes

(84) Benannte Vertragsstaaten:
**DE FR GB**

(30) Priorität: **03.02.2005 DE 102005005052**

(43) Veröffentlichungstag der Anmeldung:
**04.10.2006 Patentblatt 2006/40**

(73) Patentinhaber: **Wacker Chemie AG**
**81737 München (DE)**

(72) Erfinder:
• **Kalchauer, Wilfried, Dr.**
**84489 Burghausen (DE)**
• **Gross, Jochen**
**84577 Tüssling (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
**EP-A2- 0 893 448    DE-A1- 4 342 910**
**FR-A1- 2 861 728    US-A- 4 661 613**

**Beschreibung**

Die Erfindung betrifft ein Verfahren zur Direktsynthese von Methylchlorsilanen mit einer Kontaktmasse, welche Natrium und Kalium enthält.

Verfahren zur Herstellung von Methylchlorsilanen durch Umsetzung von Silicium mit Chlormethan in der Direktsynthese nach Müller-Rochow in Gegenwart von geeigneten Katalysatoren und Katalysatorkombinationen sind bereits bekannt. Beispielsweise ist das in "Catalyzed Direct Reactions of Silicon; K.M. Lewis, D.G. Rethwisch; Elsevier 1993" beschrieben.

Bei der Direktsynthese von Methylchlorsilanen wird metallisches Silicium mit Chlormethan in Gegenwart von verschiedenen Katalysatoren und gegebenenfalls Promotoren umgesetzt, wobei das Zielprodukt Dimethyldichlorsilan ist. Die Mischung aus Silicium, Katalysatoren und Promotoren wird als Kontaktmasse bezeichnet. Weltweit werden derzeit jährlich über 1.500.000 Tonnen Dimethyldichlorsilan hergestellt, d.h. kleine Verbesserungen im Herstellungsprozess, wie beispielsweise Erhöhung der Dimethydichlorsilan-Selektivität, Erhöhung der Dimethydichlorsilan spezifischen Raum-/Zeit-Ausbeute oder Erhöhung der spezifischen Rohstoffausbeute haben dadurch eine große wirtschaftliche Auswirkung.

DE 3841417 A1 beschreibt ein "mit Inertgas verdüstes Silicium" mit einem Na-Gehalt von 0 - 0,5% und einem K-Gehalt von 0 - 0,5%. Diese Angaben sind sehr unpräzise, speziell unter Hinzuziehung von "Silicon for the Chemical Industry, Geiranger- Norway; 16 - 18 June 1992; Seite 11 - 23; Impurity Distribution in Silicon, A. Schei, H. Rong, A.G. Forwald" und "Harry Morten Rong; Silicon for the Direct Process to Methylchlorosilanes; Dr.-Thesis; 1992, Norwegen".

In "Impurity Distribution in Silicon, A. Schei, H. Rong, A.G. Forwald" wird in Table 1 und Figure 1 eindeutig dargelegt, dass bei der Herstellung von raffiniertem, metallurgischen Silicium - wie es bei der Direktsynthese zum Einsatz kommt - Na und K Verunreinigungen hauptsächlich über die Abgase/Staub den Prozess verlassen und nur im sehr geringen Ausmaß im Silicium wiederzufinden sind. Für Na im Silicium wird explizit ein Wert von < 5 ppm angegeben.

In "Harry Morten Rong; Silicon for the Direct Process to Methylchlorosilanes; Dr.-Thesis; 1992, Norwegen" wird auf Seite 55-56 beschrieben, dass normalerweise bei der Siliciumherstellung die Alkalimetalle mit dem Abgas abgezogen werden.

DE 4342910 beschreibt, dass in der Kontaktmasse 0-0,5 Gew.-% Na und K vorhanden sind.

EP 470020 A1 beschreibt, dass in der Kontaktmasse 0,05 - 2 Gew.-% Li, Na, K, Rb oder Cs vorhanden sind.

US 4661613 A beschreibt den Einsatz von 0,05 - 4 Gew.% Cs in der Direktsynthese, wobei bis zu 90 Gew.% der beanspruchten Cs Menge durch Li, Na, K, Rb ersetzt werden können. Somit liegt der theoretische Na, K Gehalt zwischen 0 und 3,6%. In den konkreten Beispielen wird Cäsium eingesetzt.

In WO 2004/063206 ist eine wenig Koks bildender Kontaktmasse beschrieben, der 0.01 bis 2 Gew.-% an Cäsium, Kalium oder Rubidium zugesetzt wird. Konkret wurde Cäsium zugesetzt.

Aufgabe der vorliegenden Erfindung war es, ein Verfahren zur Direktsynthese von Methylchlorsilanen nach Müller-Rochow bereitzustellen, welches in Bezug auf die Herstellung von Dimethyldichlorsilan Verbesserungen aufweist.

Gegenstand der Erfindung ist ein Verfahren zur Direktsynthese von Methylchlorsilanen durch Umsetzung von Chlormethan mit einer Kontaktmasse, welche Silicium, Kupferkatalysator und einen Gesamtanteil an Natrium und Kalium von 20 bis 400 ppm enthält, wobei der Gehalt an Natrium höher ist als an Kalium.

Es wurde gefunden, dass sich ein Gesamtgehalt an Natrium und Kalium von 10 bis 400 ppm in der Kontaktmasse positiv auf die spezifische Dimethyldichlorsilan-Bildungsrate, der Bildung von $Me_2SiCl_2$ je Masse eingesetztes Silicium und Zeiteinheit, auswirkt.

Der Gesamtgehalt an Natrium und Kalium in der Kontaktmasse beträgt mindestens 20 ppm. Vorzugsweise beträgt der Gesamtgehalt an Natrium und Kalium in der Kontaktmasse höchstens 250 ppm, insbesondere höchstens 100 ppm. Vorzugsweise beträgt der Gehalt an Natrium oder Kalium in der Kontaktmasse mindestens 10 ppm und höchstens 300 ppm, vorzugsweise höchstens 100 ppm, insbesondere höchstens 50 ppm. Insbesondere ist der Gehalt an Kalium höher als an Natrium, wobei der Natriumgehalt vorzugsweise mindestens 10 ppm beträgt.

Der Gehalt an Natrium und Kalium in der Kontaktmasse wird vorzugsweise durch geeignete Maßnahmen gezielt eingestellt.

Natrium und Kalium können als Metall, Legierung, oder Verbindung der Kontaktmasse zugegeben werden oder bevorzugt mit den Rohstoffen wie Silicium und Katalysatoren in die Kontaktmasse eingebracht werden. In letzterem Fall werden unabhängig vom Gehalt an Natrium und Kalium in den Rohstoffen die Konzentrationen an Natrium und Kalium in der Kontaktmasse über die betrieblichen Parameter der Methylchlorsilan-Synthese gesteuert. Betriebliche Parameter sind in diesem Fall beispielsweise das Verhältnis aus zugeführten, frischen Rohstoffen zu aus dem System ausgeschleusten, siliciumhaltigen Feststoffen, beispielsweise Zyklonstaub oder Filterstaub, wie beschrieben in "Catalyzed Direct Reactions of Silicon; K.M. Lewis, D.G. Rethwisch; Elsevier 1993", Seite 18, Abb. 3.

Das Verfahren kann diskontinuierlich oder kontinuierlich durchgeführt werden, in der industriellen Produktion wird nur die kontinuierliche Ausführungsform angewendet. Kontinuierlich bedeutet, dass die Menge an abreagiertem Silicium und gegebnenfalls mit dem Reaktionsstaub ausgetragenen Katalysatoren und Promotoren laufend nachdosiert werden, vorzugsweise als vorgemischte Kontaktmasse. Die kontinuierliche Direktsynthese wird bevorzugt in Wirbelschichtreaktoren durchgeführt, in denen Chlormethan gleichzeitig als Fluidisierungsmedium und Reaktant eingesetzt wird.

Das benötigte Silicium wird zuvor zu einem Pulver vermahlen und mit Kupferkatalysator und Promotoren zur Kontaktmasse vermischt. Vorzugsweise wird Silicium in einer Korngröße von höchstens 700 $\mu$m, besonders bevorzugt in einer Korngröße höchstens 500 $\mu$m eingesetzt. Das eingesetzte Silicium weist üblicherweise einen Reinheitsgrad von > 98% auf.

Eine Produktionskampagne der kontinuierlichen Direktsynthese wird mit der Induktionsphase begonnen. Mit Beginn der Induktionsphase wird Methylchlorid in die erhitzte Kontaktmasse geleitet. Darauf folgt die Startphase, in welcher die Rohsilanbildung einsetzt. Die Reaktion läuft vorerst mit geringer Selektivität und Reaktivität ab. Anschließend wird die stabile Produktionsphase erreicht. Silicium und gegebenenfalls Katalysatoren und Promotoren/Co-Katalysatoren werden laufend nachdosiert. Die Produktionskampagne endet, wenn kein Chlormethan mehr in die Kontaktmasse eingeleitet wird.

Beim kontinuierlichen Betrieb eines Reaktors fallen in einer Produktionskampagne nach einer weitgehend stabilen Produktionsphase die Produktionsraten bezogen auf das Zielprodukt Dimethyldichlorsilan ab. Deshalb muss die Produktionskampagne nach einer bestimmten Zeit beendet werden. Eine Produktionskampagne dauert meist nur einige Tage bis mehrere Wochen. Der Reaktor wird nach Beendigung einer Produktionskampagne entleert, neu mit Silicium, Kupferkatalysator und Promotoren/Co-Katalysatoren befüllt und wieder auf Reaktionsbedingungen gebracht.

Bei der Direktsynthese verlassen nicht umgesetztes Chlormethan, die gasförmigen Methylchlorsilane und gegebenenfalls mitgerissene Partikel den Reaktor. Die mitgerissenen Partikel bestehen aus abreagierten Siliciumkörnen, feinen Siliciumkörnern, Katalysatoren und Promotoren/Co-Katalysatoren. Über einen oder mehrere Zyklone kann man, falls erwünscht, die mitgerissenen Partikel vom Gasstrom abtrennen, wobei große mitgerissene Partikel aus der Kontaktmasse wieder in den Reaktor zurückgeführt werden können. Das Silan wird anschließend von restlichen Staubanteilen und nicht umgesetzten Chlormethan abgetrennt und einer Destillation zugeführt. Gereinigtes, nicht umgesetztes Chlormethan kann wieder in den Reaktor eingespeist werden.

Das Verfahren wird bevorzugt in einem Wirbelschichtreaktor, vorzugsweise im Temperaturbereich von 250 bis 360°C, insbesondere bei 280 bis 330°C durchgeführt. Weil dies den geringsten Aufwand erfordert, wird das Verfahren meist beim Druck der umgebenden Atmosphäre, also bei etwa 0,1 MPa bis 0,5 MPa durchgeführt, es können aber auch höhere Drücke angewandt werden.

Beim Verfahren können auch Inertgase wie beispielsweise Stickstoff oder Argon eingesetzt werden. Vorzugsweise wird kein Inertgas verwendet.

Die Menge des Gasstromes wird in einer bevorzugten Ausführungsform so gewählt, dass im Reaktor eine Wirbelschicht aus Kontaktmasse und Gas gebildet wird. Nicht umgesetztes Chlormethan und gegebenenfalls Inertgas und die gasförmigen Methylchlorsilane verlassen den Reaktor. Die Zubereitung der Kontaktmasse erfolgt durch einfaches Mischen der Einzelkomponenten bei Raumtemperatur. Eine Behandlung der Kontaktmasse vor dem Einbringen in den Reaktor ist möglich, wird aber in der bevorzugten Ausführungsform nicht durchgeführt.

Beim erfindungsgemäßen Verfahren wird die Form des Kupfers vorzugsweise ausgewählt aus metallischem Kupfer, Kupferlegierungen, Kupferoxid und Kupferchlorid. Kupferoxid kann beispielsweise Kupfer in Form von Kupferoxid-Gemischen und in Form von Kupfer(II)oxid sein. Kupferchlorid kann in Form von CuCl oder in Form von $CuCl_2$ eingesetzt werden, wobei auch entsprechende Mischungen möglich sind. In einer bevorzugten Ausführungsform wird das Kupfer als Kupferoxid und/oder als CuCl eingesetzt. Vorzugsweise werden 0,3 bis 10 Gew.%, insbesondere 0,5 bis 7 Gew.% Kupferkatalysator, bezogen auf metallisches Kupfer und Silicium verwendet, besonders bevorzugt sind 0,8 bis 5 Gew.%.

Beim erfindungsgemäßen Verfahren können Promotoren eingesetzt werden, die vorzugsweise ausgewählt werden aus Phosphor, Cäsium, Barium, Zinn und Antimon. Die Menge an Promotoren in der Kontaktmasse beträgt vorzugsweise 5 bis 100 ppm, insbesondere 10 bis 80 ppm, besonders bevorzugt sind 15 bis 60 ppm.

Beim erfindungsgemäßen Verfahren wird in einer bevorzugten Ausführungsform Zink als Co-Katalysator eingesetzt. Zink wird vorzugsweise in Form von metallischem Zink, auch als Legierung, insbesondere als Legierung mit Kupfer und gegebenenfalls weiteren Promotoren, Zinkoxid, oder $ZnCl_2$ eingesetzt. Die Menge an Zink in der Kontaktmasse beträgt bezogen auf das Element vorzugsweise 0,005 bis 1,0 Gew.-%, besonders bevorzugt 0,01 bis 0,5 Gew.-%, insbesondere 0,05 bis 0,2 Gew.-%.

Weiterhin wurde gefunden, dass bei einem Gesamtgehalt an Natrium und Kalium von 10 bis 400 ppm in der Kontaktmasse in Kombination mit $ZnCl_2$ in der Kontaktmasse zusätzlich die Kohlenwasserstoffbildung, insbesondere die Isobutanbildung, reduziert werden kann. Die verringerte Kohlenwasserstoffbildung bedeutet eine höhere Rohstoffausbeute und für das MeCl-Kreisgas eine reduzierte Aufwendung in der MeCl/Kohlenwasserstoffbildung bzw. eine höhere Reaktivität bei unveränderter MeCl/Kohlenwasserstoffbildung. Zusätzlich wird durch diese Kombination der Anteil an unerwünschten, nicht verwertbaren Hochsiedern reduziert. Dies führt zu einer weiteren Steigerung der Rohstoffausbeute und einer Absenkung der Entsorgungskosten.

Die Kohlenwasserstoffbildung wird besonders verringert beim zusätzlichen Einsatz von Zinn als Promotor.

In den nachfolgenden Beispielen sind, falls jeweils nicht anders angegeben,

a) alle Mengen auf die Masse bezogen;
b) alle Drücke 0,10 MPa (abs.);
c) alle Temperaturen 20°C.

**Beispiele**

Die Ergebnisse bei der Umsetzung von Silicium mit Chlormethan in Gegenwart von geeigneten Katalysatoren hängen neben der Zusammensetzung der Kontaktmasse auch vom Aufbau der Versuchsanlage und der Versuchsdurchführung ab. Um die beiden letztgenannten Parameter zu eliminieren und um die Vorteile der Erfindung eindeutig aufzeigen zu können, wurden die in den nachstehenden Beispielen dargestellten Versuche nach folgender standardisierter Vorgehensweise durchgeführt.

Siliciumpulver: Käuflich erhältliches Siliciummetall gemahlen und gesiebt auf eine Korngröße im Bereich von 70 bis 240 $\mu$m.

Kupferoxid: Hergestellt nach US-A-5,306,328, Beispiel 5.

Alle anderen Chemikalien sind im Chemikalienhandel käuflich erhältlich, z.B. bei Fluka Chemie GmbH, Deutschland.

Versuchsanlage:

Labor-Wirbelschichtreaktor (senkrechtes Glasrohr mit einem Innendurchmesser von 25 mm und einer Höhe von 500 mm) mit Heizwicklung, Gasverteilerfritte, Destillationsbrücke mit Solekühlung und Vorlagekolben.

Standardisierte Vorgehensweise:

Kupferkatalysator, 0,8 g metallisches Zink als Cokatalysator, 8 mg Zinnpulver und gegebenenfalls NaCl und KCl werden innig vermischt, mit 120g Silicium durchmischt, in den Reaktor gefüllt und unter einem Stickstoffstrom von 40 1/h auf 340°C erwärmt. Anschließend werden 40 1/h Chlormethan durch den Reaktor geleitet und die Kontaktmasse auf 395°C erwärmt. Nach einer Induktionszeit im Bereich von 2 bis 30 Minuten beginnt die Silanbildung, die Reaktionstemperatur wird auf 360°C reduziert und 50 ml Methylchlorsilane werden aufgefangen (Startphase). Anschließend werden weitere 30 ml Methylchlorsilane gesammelt. Die Zeit zur Bildung dieser 30 ml Silane wird als Produktionsphase bezeichnet, die Produktionsrate (PR2) errechnet sich nach der Formel

$$PR2 = \frac{\text{g Methylchlorsilane in der Produktionsphase}}{\text{kg eingesetztes Si x Stunden für die Produktionsphase}}$$

$$\text{Die spezifische Dimethyldichlorsilan-Bildungsrate (M2-Spez.)} = \frac{PR2 \text{ x Konzentration an Dimethydichlorsilan im Rohsilan}}{100}$$

Die Silanzusammensetzung der 30 ml Methylchlorsilane wurde mittels GC-Analyse in Gewichtsprozent ermittelt.

Beispiele 1 bis 9 (Beispiele 1, 4, 5, 9 nicht erfindungsgemäß):

Es wird gezeigt, dass bei vergleichbaren Cu-Katalysatoren sich zu geringe und zu hohe K Mengen in der Kontaktmasse negativ auf die spezifische Dimethydichlorsilanbildung auswirken. Das eingesetzte Silicium hatte folgende Zusammensetzung: 0,21% Al; 0,039% Ca; 0,32% Fe; 0,032 %Ti; < 10 ppm je Einzelelement Na, K, Cs, Sr, Ba.

| Beispiel | g | [Cu] | ppm [Na] | ppm [K] | PR2 | % Silan M2 | M2 -Spez. |
|---|---|---|---|---|---|---|---|
| 1 | 6g | CuO | <10 | <10 | 248 | 85,3 | 212 |
| 2 | 6g | CuO | <10 | 25 | 283 | 85,4 | 242 |
| 3 | 6g | CuO | <10 | 250 | 292 | 81,2 | 237 |
| 4 | 6g | CuO | <10 | 500 | 278 | 82,1 | 228 |
| 5 | 7,6g | CuCl | <10 | <10 | 333 | 86,2 | 287 |
| 6 | 7,6g | CuCl | <10 | 25 | 355 | 87,0 | 309 |
| 7 | 7,6g | CuCl | <10 | 50 | 405 | 88,2 | 357 |
| 8 | 7,6g | CuCl | <10 | 100 | 397 | 85,2 | 338 |
| 9 | 7,6g | CuCl | <10 | 500 | 245 | 79,6 | 195 |

Beispiele 10 bis 28 (Beispiele 10, 15, 16, 19 nicht erfindungsgemäß) :

Es wird gezeigt, dass bei vergleichbaren Cu-Katalysatoren sich zu geringe und zu hohe Na und K Mengen in der Kontaktmasse negativ auf die spezifische Dimethydichlorsilanbildung auswirken.

Das eingesetzte Silicium hatte folgende Zusammensetzung: 0,21% Al; 0,039% Ca; 0,32% Fe; 0,032 %Ti; < 10 ppm je Einzelelement Na, K, Cs, Sr, Ba.

| Beispiel | g | [Cu] | ppm [Na] | ppm [K] | PR2 | % Silan M2 | M2 -Spez. |
|---|---|---|---|---|---|---|---|
| 10 | 6g | CuO | <10 | <10 | 248 | 85,3 | 212 |
| 11 | 6g | CuO | 10 | 15 | 307 | 86,2 | 265 |
| 12 | 6g | CuO | 20 | 30 | 389 | 85,8 | 334 |
| 13 | 6g | CuO | 40 | 60 | 373 | 83,9 | 313 |
| 14 | 6g | CuO | 100 | 150 | 299 | 82,9 | 248 |
| 15 | 6g | CuO | 200 | 300 | 121 | 83,6 | 101 |
| 16 | 7,6g | CuCl | <10 | <10 | 333 | 86,2 | 287 |
| 17 | 7,6g | CuCl | 10 | 15 | 389 | 85,7 | 333 |
| 18 | 7,6g | CuCl | 40 | 60 | 363 | 84,4 | 306 |
| 19 | 7,6g | CuCl | 500 | 500 | 144 | 72,1 | 104 |

Beispiele 20 und 21:

In einer industriellen Anlage zur Herstellung von Methylchlorsilane nach Müller-Rochow, bestehend aus einem Wirbelschichtreaktor mit kontinuierlicher Kontaktmassenzuführung, Kontaktmassenrückführung über ein Zyklonsystem, Staubausschleuse-System und Kreisgasrückführung, wie sie beispielsweise in "Catalyzed Direct Reactions of Silicon; K.M. Lewis, D.G. Rethwisch; Elsevier 1993" Seite 8 bis 21 beschrieben ist, wurde unter vergleichbaren Bedingungen, bei einer Na-Konzentration von 26 ppm und einer K-Konzentration von 40 ppm in der Kontaktmasse, ein CuCl/CuO-Gemisch als Katalysatorsystem eingesetzt. Als Promotor kam Sn zum Einsatz. Der Zn-Cokatalysator wurde variiert, wobei die absolute Konzentration an Zn in der Kontaktmasse konstant gehalten wurde.

Beispiel 20: Mit Zn-metallisch als Cokatalysator kam es im Kreisgassystem zu einer Kohlenwasserstoffanreicherung im Bereich von 0,5 bis 15 Gew.%.

Beispiel 21: Mit $ZnCl_2$ als Co-Katalysator halbierte sich - im Vergleich zu Beispiel 30 - die Kohlenwasserstoffanreicherung auf etwa 0,3 bis 8 Gew.%, wobei Isobutan den Haupteinfluss darstellte. Durch den erhöhte MeCl-Partialdruck im Kreisgas und stieg die spezifischen Dimethydichlorsilan-Raum/Zeitausbeute - gegenüber Beispiel 20 - um 5 bis 10%. Gleichzeitig reduzierte sich im gebindeten Rohsilan der Anteil an unerwünschten Hochsiedern (Siedepunkt über 71°C) um 15 bis 20 Gew.%.

**Patentansprüche**

1. Verfahren zur Direktsynthese von Methylchlorsilanen durch Umsetzung von Chlormethan mit einer Kontaktmasse, welche Silicium, Kupferkatalysator und einen Gesamtanteil an Natrium und Kalium von 20 bis 400 ppm enthält, wobei der Gehalt an Kalium höher ist als an Natrium.

**2.** Verfahren nach Anspruch 1, bei dem die Form des Kupfers aus metallischem Kupfer, Kupferlegierungen, Kupferoxid und Kupferchlorid ausgewählt wird.

**3.** Verfahren nach Anspruch 1 oder 2, bei dem Promotoren eingesetzt werden, die ausgewählt werden aus Phosphor, Cäsium, Barium, Zinn und Antimon.

**4.** Verfahren nach Anspruch 1 bis 3, bei dem Zink als CoKatalysator eingesetzt wird.

**5.** Verfahren nach Anspruch 4, bei dem Zink in Form von $ZnCl_2$ eingesetzt wird.

**6.** Verfahren nach Anspruch 4 oder 5, bei dem die Menge an Zink in der Kontaktmasse, bezogen auf das Element, 0,01 bis 0,5 Gew.-% beträgt.

**7.** Verfahren nach Anspruch 4 bis 6, bei als zusätzlicher Promotor Zinn anwesend ist.

## Claims

**1.** Process for the direct synthesis of methylchlorosilanes by reaction of chloromethane with a contact composition comprising silicon, copper catalyst and a total proportion of sodium and potassium of from 20 to 400 ppm, wherein the content of potassium is higher than that of sodium.

**2.** Process according to Claim 1, wherein the form of the copper is selected from among metallic copper, copper alloys, copper oxide and copper chloride.

**3.** Process according to Claim 1 or 2, wherein promoters selected from among phosphorus, cesium, barium, tin and antimony are used.

**4.** Process according to any of Claims 1 to 3, wherein zinc is used as cocatalyst.

**5.** Process according to Claim 4, wherein zinc is used in the form of $ZnCl_2$.

**6.** Process according to Claim 4 or 5, wherein the amount of zinc in the contact composition is, based on the element, from 0.01 to 0.5% by weight.

**7.** Process according to any of Claims 4 to 6, wherein tin is present as additional promoter.

## Revendications

**1.** Procédé pour la synthèse directe de méthylchlorosilanes par transformation de chlorométhane avec une masse de contact qui contient du silicium, un catalyseur du cuivre et une proportion totale de sodium et de potassium de 20 à 400 ppm, la teneur en potassium étant supérieure à celle en sodium.

**2.** Procédé selon la revendication 1, dans lequel la forme du cuivre est choisie parmi le cuivre métallique, les alliages de cuivre, l'oxyde de cuivre et le chlorure de cuivre.

**3.** Procédé selon la revendication 1 ou 2, dans lequel des promoteurs sont utilisés, qui sont choisis parmi le phosphore, le césium, le baryum, l'étain et l'antimoine.

**4.** Procédé selon les revendications 1 à 3, dans lequel du zinc est utilisé comme cocatalyseur.

**5.** Procédé selon la revendication 4, dans lequel du zinc est utilisé sous forme de $ZnCl_2$.

**6.** Procédé selon la revendication 4 ou 5, dans lequel la quantité de zinc dans la masse de contact, par rapport à l'élément, est de 0,01 à 0,5% en poids.

**7.** Procédé selon les revendications 4 à 6, dans lequel de l'étain est présent comme promoteur supplémentaire.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3841417 A1
- DE 4342910
- EP 470020 A1
- US 4661613 A
- WO 2004063206 A
- US 5306328 A

**In der Beschreibung aufgeführte Nicht-Patentliteratur**

- **K.M. Lewis ; D.G. Rethwisch.** Catalyzed Direct Reactions of Silicon. Elsevier, 1993
- *Silicon for the Chemical Industry, Geiranger - Norway,* 16. Juni 1992, 11-23
- *Harry Morten Rong; Silicon for the Direct Process to Methylchlorosilanes,* 1992, 55-56
- **K.M. Lewis ; D.G. Rethwisch.** Catalyzed Direct Reactions of Silicon. Elsevier, 1993, 18
- **K.M. Lewis ; D.G. Rethwisch.** Catalyzed Direct Reactions of Silicon. Elsevier, 1993, 8-21